Europäisches Patentamt

(19) European Patent Office

Office européen des brevets

(11) Numéro de publication: **0 025 389**
**B1**

(12) **FASCICULE DE BREVET EUROPEEN**

(45) Date de publication du fascicule du brevet:
**25.01.84**

(21) Numéro de dépôt: **80401246.6**

(22) Date de dépôt: **01.09.80**

(51) Int. Cl.³: **G 01 F 23/28, G 21 C 17/02,
G 01 N 9/24**

(54) **Dispositif de mesure du niveau de la surface d'un liquide et/ou de la densité locale d'un mélange disphasique liquide-vapeur.**

(30) Priorité: **05.09.79 FR 7922218**

(43) Date de publication de la demande:
**18.03.81 Bulletin 81/11**

(45) Mention de la délivrance du brevet:
**25.01.84 Bulletin 84/4**

(84) Etats contractants désignés:
**BE CH DE GB IT LI NL SE**

(56) Documents cités:
**FR - A - 1 232 470
US - A - 3 100 841**

(73) Titulaire: **COMMISSARIAT A L'ENERGIE ATOMIQUE Etablissement de Caractère Scientifique Technique et Industriei, B.P. 510, F-75752 Paris Cedex 15 (FR)**

(72) Inventeur: **Bernard, Patrice, 49, ter Avenue Saint Jérôme, F-13100 Aix en Provence (FR)**
Inventeur: **Bouchard, Jacques, 21, chemin du Four, F-13100 Aix en Provence (FR)**

(74) Mandataire: **Mongrédien, André et al, c/o BREVATOME 25, rue de Ponthieu, F-75008 Paris (FR)**

ACTORUM AG

Dispositif de mesure du niveau de la surface d'un liquide et/ou
de la densité locale d'un mélange disphasique liquide-vapeur.

La présente invention concerne un dispositif de mesure selon le préambule de la revendication 1.

Il est connu de mesurer le niveau d'un corps, liquide ou solide, à l'intérieur d'une enceinte au moyen d'une ou de plusieurs sources radioactives disposées verticalement à l'extérieur de l'enceinte à des niveaux différents, et de détecteurs, situés sur la paroi opposée de l'enceinte, qui reçoivent le rayonnement provenant desdites sources. Le taux d'absorption du rayonnement émis par les sources présente un taux d'atténuation qui est variable avec le matériau traversé. Le niveau du corps dans l'enceinte est déduit de l'intensité du rayonnement mesuré par les détecteurs situés le long de la paroi de l'enceinte.

Le brevet américain US-A-3 100 841 décrit un dispositif de mesure de niveau de la charge dans un haut-fourneau qui fonctionne selon ce principe. Il comporte une série de jauges de niveau constituées chacune par une source radioactive, un détecteur, et une lampe témoin. Les sources radioactives sont disposées sur le haut-furneau selon une ligne verticale. Les détecteurs sont situés sur une ligne verticale diamétralement opposée à la première. Chaque source radioactive est disposée au fond d'un puits cylindrique de collimation. Le détecteur, constitué par un tube G. M., est également disposé au fond d'un puits cyclindrique, de telle manière que la partie sensible du tube soit exposée aux radiations de la source diamétralement opposée. Chaque détecteur n'est sensible qu'aux radiations provenant de la source qui lui est associée grâce à un dispositif de collimation. Des moyens sont prévus pour enregistrer une indication lorsque le niveau des radiations détectées dépasse un niveau donné. On en déduit le niveau de la charge dans le haut-fourneau.

Cependant, un dispositif de mesure tel que celui qui vient d'être décrit n'est pas adapté à la mesure du niveau d'un liquide contenu dans une enceinte radioactive. En effet, l'activité de ce liquide noie la radioactivité provenant des sources radioactives, ce qui rend impossible la mesure du niveau dudit liquide.

L'invention a précisement pour objet un dispositif de mesure tel que défini dans la revendication 1.

Elle s'applique particulièrement, mais non exclusivement, à la mesure du niveau de l'eau liquide contenue dans le pressuriseur d'un réacteur nucléaire à eau sous pression (PWR).

On sait en effet que dans les réacteurs nucléaires du type PWR, le maintien de la pression dans le circuit primaire (et donc dans la cuve du réacteur) à une valeur de l'ordre de 155 bars est assuré par un pressuriseur qui est constitué par une enceinte fermée dans laquelle on maintient la pression du circuit primaire par équilibre entre la phase liquide et la phase gazeuse de l'eau. Un accident de dépressurisation étant particulièrement grave, il est spécialement intéressant de contrôler le fonctionnement de ce pressuriseur et donc le niveau de la phase liquide dans celui-ci.

La mesure du niveau de liquide dans le pressuriseur au moyen du dispositif qui va être décrit ultérieurement permet de fournir une information complémentaire et redonante, particulièrement utile dans certaines conditions de fonctionnement du réacteur (transitoires de grande amplitude, incident ...). Ce dispositif permet de calibrer et de compléter les mesures actuelles par différence de pression qui posent parfois des problèmes de représentativité (dérive, hystérésis, recalage, inaptitude à déceler d'éventuelles situations diphasiques).

On dispose selon une première génératrice de l'enceinte, N émetteurs de rayonnement collimatés dont le faisceau est dirigé sensiblement selon des diamètres de l'enceinte, et selon une génératrice diamétralement opposée à la première génératrice, des détecteurs pour recueillir le rayonnement ayant traversé l'enceinte contenant le mélange liquide-gaz. On mesure ainsi l'atténuation du rayonnement et on peut, par identification de la carte axiale des taux de comptage des détecteurs, mesurer la position du niveau du liquide. Par ailleurs, le dispositif ayant été calibré lors de sa mise en place (mesure initiale: enceinte vide, puis avec différents niveaux d'eau), on peut estimer, à plusieurs cotes verticales, la densité d'eau moyenne le long du trajet du rayonnement.

Afin de permettre la mesure du rayonnement provenant des sources radioactives proprement dites, le dispositif de l'invention comporte au moins un détecteur placé de telle façon qu'il ne soit pas soumis aux rayonnements émis par les sources. On peut ainsi corriger, dans le taux de comptage total, la partie qui est due à l'activité de l'eau.

De manière plus précise, selon l'invention, le dispositif de mesure du niveau de la surface d'un liquide et/ou de la densité locale d'un mélange diphasique liquide-vapeur dans une enceinte à axe vertical contenant un fluide radioactif, la paroi de l'enceinte étant susceptible de recevoir des dépôts de produits de corrosion radioactifs, comprend:
— N sources de rayonnement disposées sur une même première verticale à proximité de la paroi de l'enceinte, lesdites sources étant aptes à émettre des rayonnements traversant ladite enceinte;
— N' détecteurs de rayonnement, avec N' > N, disposés à des niveaux successifs sur une deuxième verticale contenues dans le plan défini par la première verticale et ledit axe, lesdits détecteurs étant aptes à détecter le rayonnement ayant traversé ladite enceinte chaque détecteur mesurant l'intensité du rayonnement reçu;
— des moyens pour traiter lesdites mesures et en déduire le niveau de la surface du liquide et/ou la densité locale du mélange diphasique;
et se caractérise en ce qu'il comprend en outre au moins un détecteur supplémentaire disposé en dehors de la zone atteinte par le rayonnement émis par les sources, ledit détecteur étant apte à mesurer le rayonnement dû à la radioactivité du fluide et desdits dépôts et à fournir un signal de correction pour le taux de comptage total.

Cette mesure permet non seulement de déterminer un niveau d'équilibre entre la vapeur et le liquide, par exemple de l'eau, mais également de donner une image des zones d'équilibre diphasique entre la vapeur et le liquide, et l'estimation de la densité correspondante. Il s'agit d'une part de zones essentiellement liquides dans lesquelles on trouve des bulles de vapeur et d'autre part de zones essentiellement de vapeur dans lesquelles on trouve des gouttelettes d'eau.

De préférence, le dispositif de mesure selon l'invention comprend entre la paroi de l'enceinte et chacun desdits N' détecteurs un dispositif de collimation du rayonnement ayant traversé l'enceinte, ce collimateur étant constitué d'un ensemble de plaques métalliques parallèles dont la fonction est de réduire la contribution au taux de comptage des émetteurs de rayonnement parasite situés à proximité des détecteurs.

De toute façon, les caractéristiques et avantages du dispositif objet de l'invention apparaîtront plus clairement à la lecture de la description qui suit, donnée à titre illustratif, en référence aux figures annexées sur lesquelles on a représenté:

sur la figure 1, une vue en coupe verticale d'un pressuriseur montrant l'implantation des sources de rayonnement et l'implantation des détecteurs de rayonnement;

sur la figure 2, une vue en coupe horizontale montrant plus en détail un exemple de réalisation dans lequel le rayonnement est un rayonnement $\gamma$;

sur la figure 3, une vue en coupe d'un mode de réalisation du collimateur associé à chaque détecteur de rayonnement;

sur les figures 4 et 5, des schémas illustrant un mode de détection du niveau à l'aide de sources de rayonnement $\gamma$ et de détecteurs; et

sur la figure 6, un exemple de configuration diphasique à l'intérieur du pressuriseur illustrant un des avantages du dispositif faisant l'objet de l'invention.

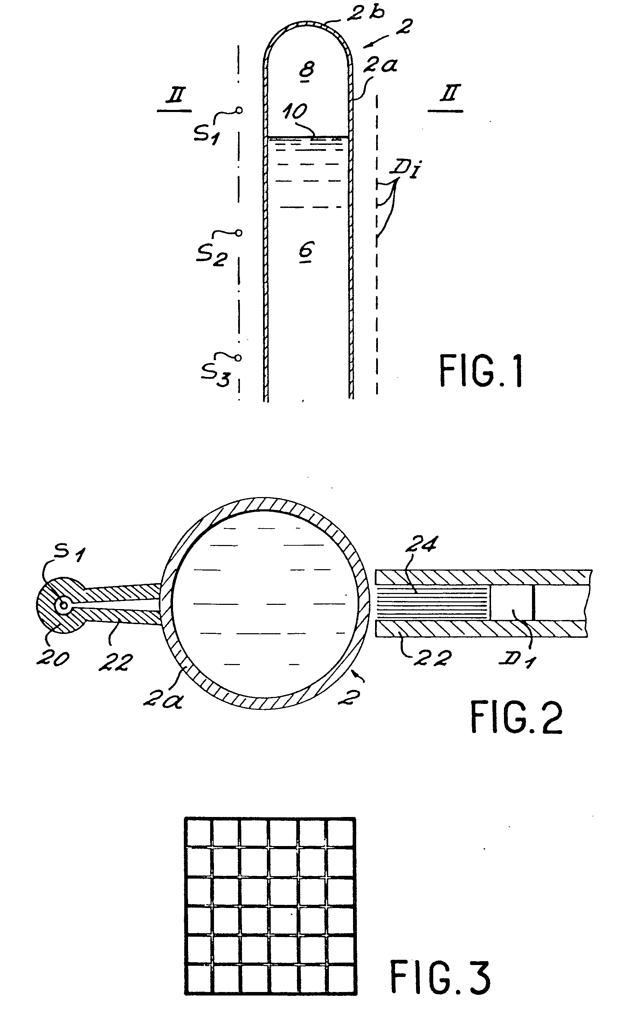

Sur la figure 1, on a représenté un dispositif conforme à l'invention. Sur cette figure, on voit en coupe verticale axiale le pressuriseur 2 constitué par une paroi latérale cylindrique 2a et fermée par un fond supérieur 2b. Dans cette enceinte, on trouve une phase liquide 6 en équilibre avec une phase vapeur 8. On a symbolisé par le trait horizontal 10 l'interface entre ces deux milieux. Bien entendu, on sait qu'en fait cette séparation peut ne pas être aussi rigoureuse.

Pour assurer la détection du niveau, on a disposé selon une droite parallèle à une génératrice de la paroi latérale 2a des sources de rayonnement $S_1$, $S_2$ et $S_3$. Selon une droite parallèle à une génératrice de la paroi latérale 2a du pressuriseur et contenue dans le même plan axial que la première génératrice, on a disposé une pluralité de détecteurs de rayonnement portant la référence générale $D_i$. Ces détecteurs couvrent partiellement ou totalement la hauteur axiale du pressuriseur.

Sur la figure 2, on a représenté plus en détail une partie de cette installation dans le cas où la source de rayonnement est une source $\gamma$. On retrouve bien sûr l'enveloppe latérale 2a du pressuriseur 2. Par exemple, le diamètre intérieur du pressuriseur est de 213,4 cm et l'épaisseur de la paroi est de 10,8 cm. La source $S_1$ qui est par exemple une source de cobalt 60 de 1 000 curies est logée dans un blindage 20 qui se prolonge par une collimation 22 vers la paroi 2a. Cette collimation est conçue pour limiter le rayonnement d'une des sources S, à une partie d'espace autour du plan vertical contenant la source et la génératrice sur laquelle sont alignés les détecteurs. Par exemple, la distance entre le contact avec la paroi 2a et la source est de 100 cm.

Disposé sur un même diamètre du pressuriseur, on trouve un détecteur $D_1$. Ce détecteur peut être un scintillateur à l'iodure de sodium. Ce détecteur est également logé dans un blindage 22. Entre le détecteur $D_1$ et la paroi 2a et à l'intérieur du blindage 22, on trouve de préférence un collimateur 24 formé de plaques métalliques parallèles aux rayonnements incidents et dont la section peut être par exemple en forme de quadrillage. Ce quadrillage est constitué par un ensemble de tôles métalliques. Sur la figure 3, on voit mieux ce collimateur qui présente par exemple un pas de 1 cm. Par exemple, la longueur du collimateur selon le trajet du rayonnement est de 120 cm.

On sait qu'un rayonnement $\gamma$ traversant un matériau donné présente un certain taux d'atténuation ($\tau$) en ligne droite. En plaçant donc un détecteur en face de la source, on peut mesurer le rayonnement qui a traversé le liquide ou le gaz et en déduire la densité de ce liquide ou de ce gaz ou même du mélange liquide-gaz.

En disposant les sources et les détecteurs à des niveaux différents selon la direction axiale du pressuriseur, on peut ainsi dresser une carte axiale de la densité du fluide emplissant le pressuriseur. Il faut cependant rappeler que le rayonnement doit également traverser les parois métalliques du pressuriseur. Le tableau ci-après donne le libre parcours moyen pour le rayonnement $\gamma$ selon son énergie.

TABLEAU

*Libres parcours moyen pour les calculs de flux sans choc pour les gammas de 1 MeV*

| $\rho$ H$_2$O liquide = 593,2 kg m$^{-3}$ | 155 bars |
| $\rho$ H$_2$O vapeur = 102,4 kg m$^{-3}$ | 345°C |

| Particules | $\lambda$ Fer | $\lambda$ H$_2$O liquide | $\lambda$ H$_2$O vapeur |
|---|---|---|---|
| Gammas de 1,33 MeV | 2,46 cm | 27,53 cm | 159,47 cm |
| Gammas de 1,17 MeV | 2,31 cm | 25,76 cm | 149,22 cm |
| Gammas de 800 KeV | 1,92 cm | 21,45 cm | 124,24 cm |

Si l'on considère l'exemple particulier illustré par la figure 2 et les données numériques citées plus haut, on obtient les taux de comptage suivants:

$\tau_V \simeq 6 \times 10^4$ s$^{-1}$ en phase vapeur;

$\tau_L \simeq 90$ s$^{-1}$ en phase liquide

pour une pression de 155 bars et une température de 345°C. Dans ces calculs, on considère que le détecteur $D_1$ est placé en face de la source $S_1$ et à la même hauteur.

Comme on l'a indiqué, il est nécessaire de prendre en compte l'activité déposée correspondant aux dépôts de produits de corrosion sur les parois du pressuriseur. Cependant, les systèmes de collimation quadrillée représentés sur la figure 2 permettant de minimiser l'influence du dépôt des produits de corrosion et du volume d'eau qui ne se trouve pas sur les lignes joignant la source S aux élémentaire émettrice de la paroi n'éclaire ainsi que la surface en regard du détecteur sans pour autant limiter sensiblement le rayonnement issu de la source $S_1$ qui se présente comme un faisceau quasi parallèle au niveau du détecteur.

Dans ces conditions, on peut dire que le taux de comptage correspondant au dépôt est faible devant celui qui est dû à la source.

Il faut également tenir compte de la contribution de l'activité de l'eau primaire sur les détecteurs. Le taux de comptage correspondant serait très faible pour les activités de l'eau primaire correspondant à un fonctionnement normal du réacteur.

Le taux de comptage du détecteur étant fonction du nombre de molécules d'eau rencontrées en ligne droite par le rayonnement, ce taux mesuré donne une image de la densité de l'eau au niveau du détecteur.

En particulier, il est possible par cette méthode de détecter des configurations diphasiques très particulières comme celles de la figure 6. On y trouve dans la partie centrale des bulles B de vapeur, alors que la zone périphérique P est entièrement constituée par de l'eau liquide.

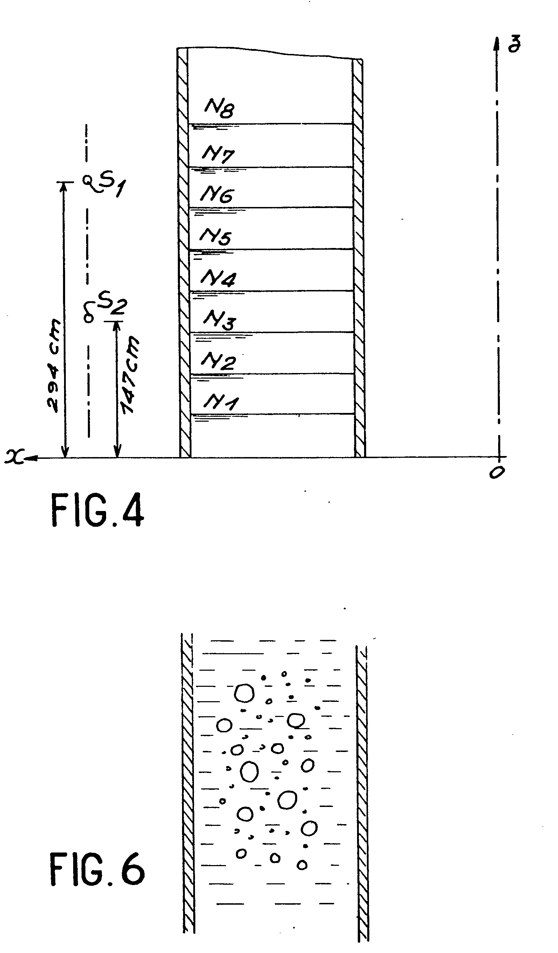

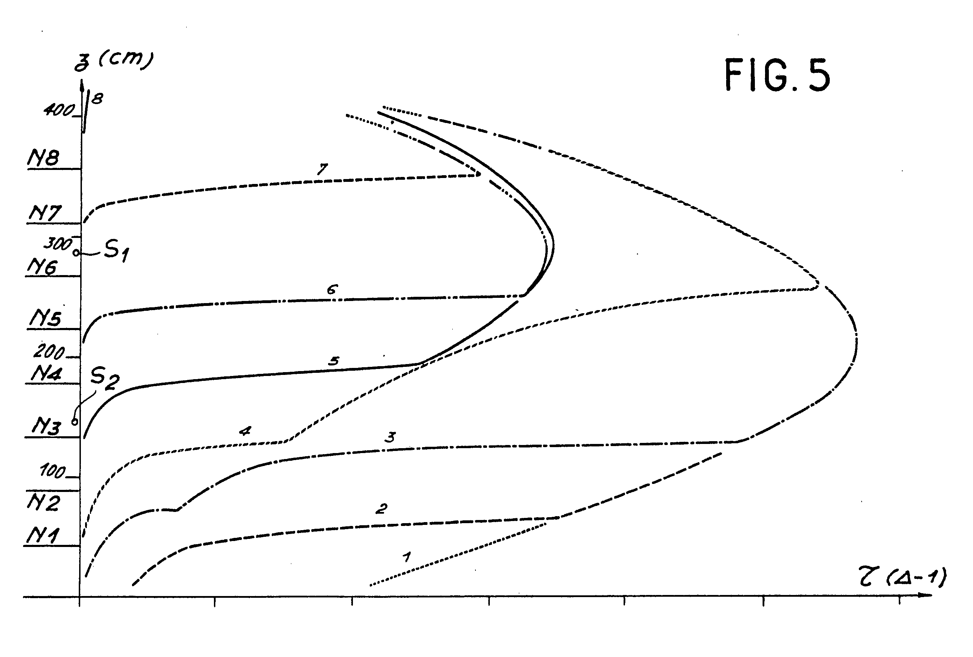

Les figures 4 et 5 donnent, d'une part, un repérage des niveaux d'eau $N_1$, $N_2$ ... $N_8$ (figure 4) par rapport aux sources gamma $S_1$ et $S_2$ et, d'autre part (figure 5), le taux de comptage $\tau$ ($s^{-1}$) en fonction de la cote $z$ (en cm) pour les différents niveaux qui sont repérés 1, 2, ... 8.

Afin de permettre la mesure du niveau de l'eau dans le cas où son activité est importante, on utilise un ou deux détecteurs supplémentaires placés de telle façon qu'ils ne soient pas soumis aux rayonnements émis par les sources. On peut ainsi corriger dans le taux de comptage total la partie qui est due à l'activité de l'eau et des dépôts.

D'un point de vue pratique, la mise en place d'une source $^{60}$Co de 1 000 Ci pose des problèmes en raison de l'importance de la protection contre les radiations qu'elle exige. Il faut un conteneur de plomb de 21 cm ayant un poids d'environ 1 tonne. La dose au contact est alors inférieure à 200 mrem/h.

C'est pourquoi il peut être intéressant de remplacer le rayonnement gamma par un faisceau neutronique. On peut en particulier utiliser une source deutérium-tritium donnant des neutrons de 14 MeV avec une émission de l'ordre de $5.10^{10}$ $s^{-1}$ dans un angle solide de $4\,\pi$.

Pour un détecteur ayant les caractéristiques suivantes:
— surface de détection: 160 cm²
— efficacité         : 0,01,
on aurait avec une source et un détecteur sur un même diamètre, tous deux étant placés à 30 cm de la paroi, les ordres de grandeur des taux de comptage suivants:

$\tau \simeq 100$ $s^{-1}$ en phase vapeur;
$\tau \simeq 1,4 \times 10^{-3}$ $s^{-1}$ en phase liquide;
$\tau \simeq 3,6 \times 10^{-2}$ $s^{-1}$ pour un mélange diphasique où les 3/4 du parcours se font en phase liquide.

Dans ce cas, on utilise bien sûr un détecteur adapté à la détection des neutrons.

L'exploitation des comptages se fait comme avec le rayonnement gamma et on peut ainsi dresser une «carte» axiale des densités et donc des répartitions eau liquide-eau vapeur.

Il faut cependant observer que dans le cas où l'on utilise une source de neutrons, les taux de comptage indiqués précédemment montrent qu'il est pratiquement impossible de déceler la présence d'une faible proportion de vapeur dans le liquide.

On voit donc que le dispositif faisant l'objet de l'invention permet de dresser un relevé axial de la densité du fluide remplissant l'enceinte et donc de déduire le niveau de liquide dans l'enceinte avec une précision qui dépend du nombre de détecteurs utilisés. On voit de plus qu'il est possible de s'affranchir des difficultés résultant de l'activité éventuelle de l'eau contenue dans l'enceinte et des dépôts de produits de corrosion sur la paroi interne de l'enceinte.

## Revendications

1. Dispositif de mesure du niveau de la surface d'un liquide et/ou de la densité locale d'un mélange diphasique liquide-vapeur dans une enceinte (2) à axe vertical contenant un fluide radioactif (6), la paroi de l'enceinte (2) étant susceptible de recevoir des dépôts de produits de corrosion radioactifs, le dispositif de mesure comprenant:
— N sources de rayonnement ($S_1$, $S_2$, $S_3$) disposées sur une même première verticale à proximité de la paroi de l'enceinte (2), lesdites sources étant aptes à émettre des rayonnements traversant ladite enceinte;
— N' détecteurs de rayonnement ($D_i$) avec N' >N, disposés à des niveaux successifs sur une deuxième verticale contenue dans le plan défini par la première verticale et ledit axe, lesdits détecteurs étant aptes à détecter le rayonnement ayant traversé ladite enceinte (2), chaque détecteur mesurant l'intensité du rayonnement reçu;
— des moyens pour traiter lesdites mesures et en déduire le niveau (10) de la surface du liquide (6) et/ou la densité locale du mélange diphasique;
caractérisé en ce qu'il comprend en outre au moins un détecteur supplémentaire disposé en dehors de la zone atteinte par le rayonnement émis par les sources ($S_1$, $S_2$, $S_3$), ledit détecteur étant apte à mesurer le rayonnement dû à la radioactivité du fluide et desdits dépôts et à fournir un signal de correction pour le taux de comptage total.

2. Dispositif selon la revendication 1, caractérisé en ce qu'il comprend entre la paroi de l'enceinte (2) et chacun desdits détecteurs ($D_i$) un dispositif de collimation (24) du rayonnement ayant traversé l'enceinte (2), ce collimateur étant constitué d'un ensemble de plaques métalliques parallèles dont la fonction est de réduire la contribution au taux de comptage des émetteurs de rayonnement parasite situés à proximité des détecteurs.

## Patentansprüche

1. Vorrichtung zum Messen des Standes einer Flüssigkeit und/oder der örtlichen Dichte einer zweiphasigen Flüssigkeit-Dampf-Mischung in einem Behälter (2) mit vertikaler Achse, der ein radioaktives Fluid (6) enthält, wobei die Wand des Behälters (2) Ablagerungen von radioaktiven Korrosionsprodukten aufnehmen kann und die Messvorrichtung umfasst:

— N Strahlungsquellen ($S_1$, $S_2$, $S_3$), die auf derselben ersten Vertikalen in der Nähe der Wand des Behälters (2) angeordnet sind, wobei die Quellen den Behälter durchdringende Strahlung aussenden können;
— N' Strahlungsempfänger ($D_i$) mit N' > N, die auf einanderfolgenden Höhen auf einer zweiten Vertikalen angeordnet sind, die in der von der ersten Vertikalen und der Achse festgelegten Ebene enthalten ist, wobei die Empfänger die durch den Behälter (2) hindurchgegangene Strahlung empfangen können und jeder Empfänger die empfangene Strahlungsintensität misst,
— Mittel, um die Messungen zu verarbeiten und aus ihnen den Stand (10) der Oberfläche der Flüssigkeit (6) und/oder die örtliche Dichte der zweiphasigen Mischung abzuleiten,

dadurch gekennzeichnet, dass die Messvorrichtung ferner wenigstens einen zusätzlichen Empfänger umfasst, welcher ausserhalb des Bereiches angeordnet ist, der von der von den Quellen ($S_1$, $S_2$, $S_3$) ausgesandten Strahlung erreicht wird, wobei der Empfänger geeignet ist, die der Radioaktivität des Fluids und der Ablagerungen zueigene Strahlung zu messen und ein Korrektursignal für den gesamten Zählwert zu liefern.

2. Vorrichtung nach Anspruch 1, dadurch gekennzeichnet, dass die Vorrichtung zwischen der Wand des Behälters (2) und jedem der Empfänger ($D_i$) eine Einrichtung (24) zum Kollimieren der durch den Behälter (2) hindurchgegangenen Strahlung aufweist, wobei der Kollimator von einer Gesamtheit von parallelen Metallplatten gebildet ist, deren Funktion darin besteht, den Beitrag von Störstrahlungssendern. die sich nahe der Empfänger befinden, am Zählwert zu verringern.

## Claims

1. Apparatus for measuring the level of a liquid surface and/or the local density of two-phase liquid/vapor mixture in an enclosed vessel (2) with a vertical axis containing a radioactive fluid (6), the wall of the enclosed vessel (2) being susceptible of receiving deposits of radioactive corrosion products, the measuring apparatus comprising:
— N radiation sources ($S_1$, $S_2$, $S_3$) located on the same first vertical line near the wall of the enclosed vessel (2), said sources being adapted to emit radiation traversing the said enclosed vessel;
— N' radiation detectors ($D_i$) wherein N' > N, located at successive levels on a second vertical line and the said axis, said detectors being adapted to detect radiation which has traversed said enclosed vessel (2), each detector measuring the intensity of radiation received;
— means for processing said measurements and for deducting therefrom the surface level (10) of liquid (6) and/or the local density of the two-phase mixture;

characterized in that it additionally comprises at least one supplementary detector located outside the zone affected by radiation emitted by sources ($S_1$, $S_2$, $S_3$), said detector being adapted to measure the radiation caused by the radioactivity of the fluid and said depositis, and to provide a correction signal for the total count.

2. Apparatus according to claim 1, characterized in that it comprises, between the wall of the enclosed vessel (2) and each of the detectors ($D_i$) a collimating device (24) for radiation which has traversed the enclosed vessel (2), said collimator comprising an assembly of parallel metal plates whose function is to reduce the contribution to the count of parasitic radiation emitters located near the detectors.

0 025 389

FIG.1

FIG.2

FIG.3

FIG.4

FIG.6

FIG. 5